(19) **Europäisches Patentamt European Patent Office Office européen des brevets**

(11) **EP 1 742 024 B1**

(12) **EUROPEAN PATENT SPECIFICATION**

(45) Date of publication and mention of the grant of the patent:
**06.02.2008 Bulletin 2008/06**

(51) Int Cl.:
***G01F 1/66*** (2006.01)

(21) Application number: **05106085.3**

(22) Date of filing: **05.07.2005**

(54) **Ultrasonic flowmeter with triangular cross section**

Ultraschalldurchflussmesser mit dreieckigem Querschnitt

Débitmètre à ultrasons avec section transversale triangulaire

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**10.01.2007 Bulletin 2007/02**

(73) Proprietor: **UAB Axis Industries**
**47190 Kaunas (LT)**

(72) Inventors:
• **Ragauskas, Arminas**
**LT 51362, Kaunas (LT)**

• **Daubaris, Gediminas**
**LT 50166, Kaunas (LT)**
• **Petkus, Vytautas**
**LT 48300 Kaunas (LT)**

(74) Representative: **Aalbers, Arnt Reinier et al**
**De Vries & Metman**
**Overschiestraat 180**
**1062 XK Amsterdam (NL)**

(56) References cited:
**US-A1- 2002 124 661      US-B1- 6 330 831**

**Description**

The invention relates to an ultrasonic flowmeter comprising a measuring tube and at least two ultrasound transmitting and/or receiving transducers located inside the tube.

Such a flowmeter is known in the art, e.g., US 5,650,572 relates to an ultrasound flowmeter and acknowledges that, when using ultrasound to measure the flow of moving liquid or gaseous media (fluids), the problem arises that the measurement signal supplied from the receiver depends not only on the flow, but also on the respective flow profile in the measurement tube and on the type of fluid flowing through it. Various flow profiles result, depending on the flow rate.

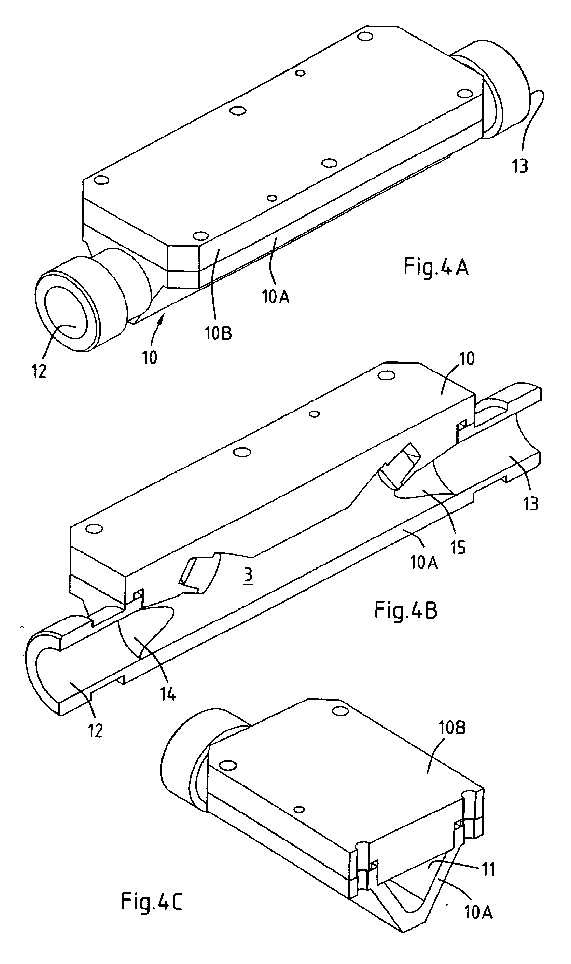

To improve measurement accuracy, the flowmeter according to US 5,650,572 comprises a "quadratic measurement tube", an ultrasound transmitter transmitting ultrasound energy towards an opposite reflector in the tube, which reflects the ultrasound energy so that it is reflected at least once on every planar wall of said measurement tube before reaching a second reflector, opposite the receiver (Figure 4a). I.e., the ultrasound energy propagates along a spiral path in the tube.

EP 890 826 relates to a flowmeter, which consists of a casing (1) provided with a cover (6). The flowmeter can be interposed in a pipeline system. The casing is provided to hold a measuring system, which includes a fitted ultrasonic converter on the cover, facilities for multiple detection of the ultrasound energy from the ultrasonic transmitter to the ultrasonic receiver in the flow passage of the casing, and associated electronics. A removable insert (9) is arranged in the flow passage (2) of the casing. The removable insert and the cover (6) together form an entity, which contains the entire measurement system. The insert is trough-shaped, and fits in a matching pocket (4) in the casing.

JP 11237263 relates to an ultrasonic flowmeter wherein ultrasonic waves generated by a transducer T1 and a transducer T2 are radiated into a fluid, which flows inside a conduit. The "cross-sectional shape of the conduit in which the ultrasonic waves are propagated is formed to be nearly rectangular, and the inner wall surface which is nearly parallel to the propagation route of the ultrasonic waves has a gentle inclination. As a result, the number of times of their reflection on the inner wall surface is increased with reference to the component of the ultrasonic waves which are propagated so as to be deviated from a shortest route, and the point of time of their arrival to the reception-side transducer is delayed."

To maintain the efficacy of a flowmeter, its measuring tube should be cleaned periodically and the flowmeter recalibrated.

It is an object of the present invention to increase the intervals between periodic cleaning and recalibration and/or render the flowmeter more suitable for use with corrosive fluids and/or fluids that contain a relatively high concentrations of pollutants, i.e. cause relatively rapid corrosion and/or fouling of the tube. It is a further object of the present invention to reduce the influence of unintended reflections of the ultrasonic waves inside the tube.

To this end, the flowmeter according to the present invention is characterized in that the tube has a triangular cross-section over at least the section of the tube that extends between the transducers.

It was found that a tube having a triangular cross-section allows effective ensonification of a fluid, i.e. a gas or a liquid, flowing through the tube with fewer reflections, preferably (precisely) two reflections, and, at least if the waves propagate along a spiral path or paths, suppression or even elimination of direct (non-spiral) reflections, thus improving the ratio between waves containing information and waves that qualify as disturbances.

It is preferred that the tube comprises a housing having two main parts, a first part provided with a V-groove, and preferably also with fluid in- and outlets, and a second part having flat surface, which, together with the V-shaped channel section, forms a triangular duct. It is especially preferred that the transducers are mounted in the said flat surface of the second part. This construction allows relatively straightforward manufacturing, as will be explained in more detail below.

In a further preferred embodiment, the transducers have a diameter in a range from 5 mm to 16 mm, preferably in a range from 5 mm to 7 mm. Such relatively small transducers allow a reduction of the internal width ('B'; see definition below) of the measuring tube to less than 8 mm, yielding a relatively small size flow sensor for use in pipes having a relatively small inner diameter, such as DN15 or DN20.

Within the framework of the present invention the words "triangular cross-section" include any cross-section that comprises three reflective surfaces extending in a flow direction and arranged along the sides of a triangle, preferably an equilateral triangle. Examples include triangular cross-sections with rounded or flattened apexes, e.g. hexagonal cross-sections with three evenly distributed sides of a relatively small width and three equidistant sides of a relatively large width, preferably at least ten times larger.

The ultrasonic flowmeter according to the present invention will be further explained with reference to the accompanying drawings.

Figures 1 to 3 schematically depict an ultrasonic flowmeter according to the present invention.

Figures 4A to 4C are perspective views of (cross-sections of) a measuring tube in accordance with the present invention.

Figures 5A and 5B are a perspective view and a cross-section of the flowmeter according to Figures 4.

Figure 6 is a cross-section of a transducer for use in the flowmeter according to Figures 4 and 5.

Figures 7 to 10B are diagrams containing experimental results obtained with the present flowmeter.

It is noted that the drawings are not necessarily to scale and that details, which are not necessary for understanding the present invention, may have been omitted. Terms "upper", "lower", "side", and the like relate to the embodiments as oriented in the figures. Further, elements that are at least substantially identical or that perform an at least substantially identical function are denoted by the same numeral.

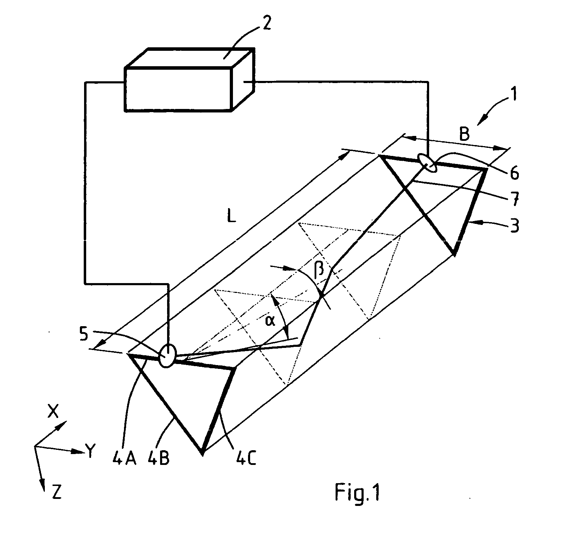

Figures 1 to 3 schematically depict an ultrasonic flowmeter 1 according to the present invention comprising an electronic processing unit 2, known in itself and operating on a transit time principle, also referred to as 'time-of-flight' principle, and a measuring tube 3 having three substantially flat internal walls 4 forming an equilateral triangular internal cross-section. Two ultrasonic transducers 5, 6, again known in themselves and having a central frequency of the transmitted ultrasonic signal of 1,75 MHz, are located in one of the walls 4A of the tube 3 and are oriented such that ultrasound waves transmitted by one of these transducers 5, 6 will propagate to the other transducer along a spiral path 7, reflecting once on each of the remaining (side)walls 4B, 4C.

Spiral acoustic propagation enables elimination of the influence of the flow velocity profile on the measurement data uncertainty, thus rendering the measurements less sensitive or even effectively insensitive to changes of the Reynolds number and asymmetry of or swirling within the flow profile.

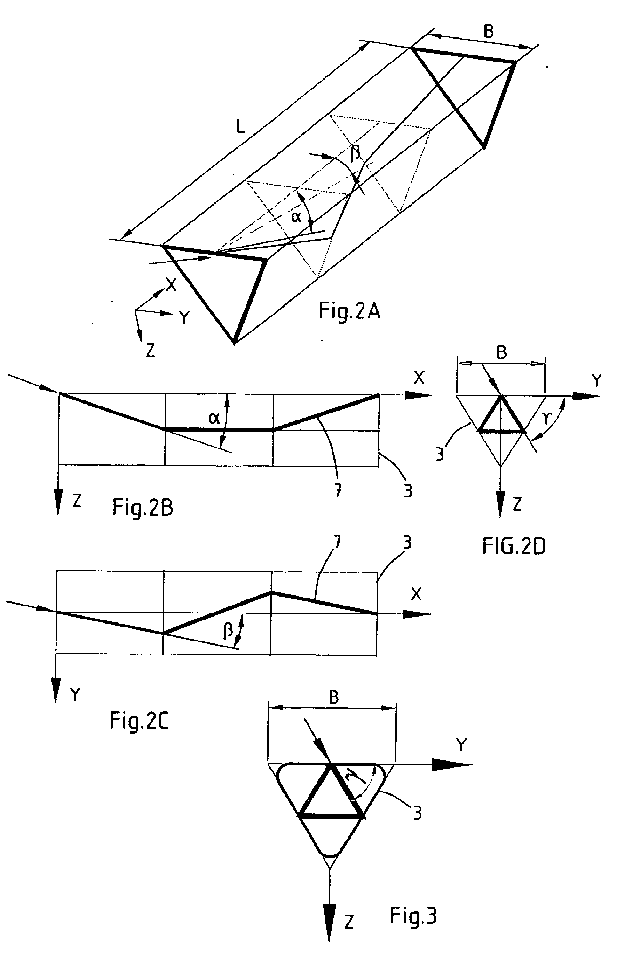

The central axis of the spatial distribution of ultrasonic wave power radiated from at least one of the transducer has a direction defined by three angles, $\alpha$, $\beta$, and, $\gamma$, in a system of orthogonal axes, as shown in Figures 2A to 2C. In case of a measuring tube having a cross-section corresponding to an equilateral triangle, the angles $\alpha$, $\beta$, and, $\gamma$, are preferably defined by the following equations:

$$\alpha = arctg(3^{3/2}B/2L)\,, \quad \beta = arctg(3B/4L)\,, \quad \gamma = \pi/3\,,$$

where B and L are respectively the width and (effective) length of the walls. In case of a measuring tube having a triangular cross-section with rounded apexes, the length B is defined as the distance between the imaginary apexes of the triangle (see Figure 3).

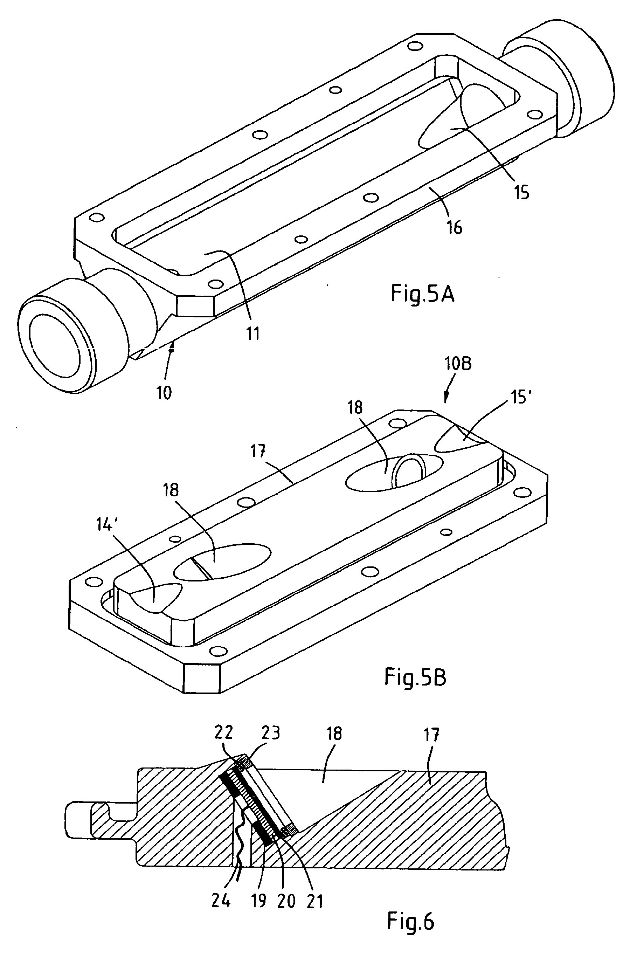

Figures 4A to 5B shows a presently preferred embodiment of a measurement tube 3 according to the invention comprising a metal, e.g. brass or stainless steel, or plastic housing 10 having two main parts, a first part 10A provided with a V-shaped channel section 11, preferably having a bottom-angle of 60 degrees, and a second part 10B or cover, which, together with the V-shaped channel 11 forms a triangular duct 3.

The first part 10A further comprises in- and outlets 12, 13, each having a round cross-section, and smooth transformation sections 14, 15, from a round cross-section to a triangular cross-section (inlet 12) and *vice versa* (outlet 13), and a flange 16.

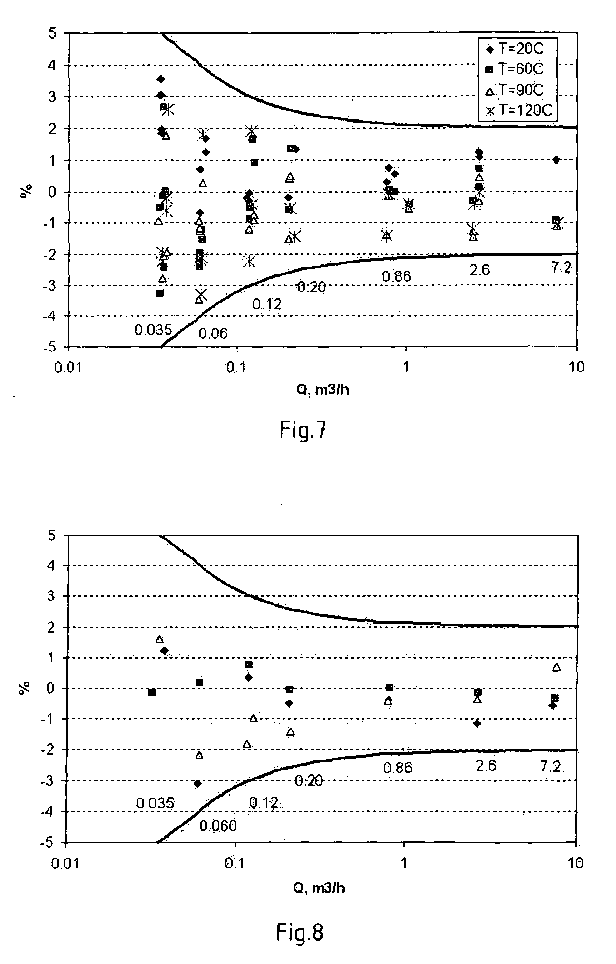

The second part 10B comprises a flange 17, which is to be bolted to the flange 16 on the first part and which has a flat surface 4A provided with two pockets 18, shown in Figure 6, each accommodating an ultrasonic transducer 5, 6. The flat surface 4A is raised with respect to the flange 17, such that, when the second part 10B is placed on top of the first part 10A, the surface 4A fits closely into the flange 16 of the first part 10A and abuts the upper edges of the V-shaped channel section 11, thus forming the triangular duct 3. Also, the flat surface 4A is provided with smooth notches 14', 15' supplementing the transformation sections 14, 15.

The pockets 16 allow a relatively straightforward assembly of the ultrasonic transducers 5, 6, without the need for an additional housing for each of the transducers 5, 6. In this preferred embodiment, the pockets 18 are milled into the flat surface 4A and the transducers 5, 6, each comprise, at the bottom of the respective pocket 18, a layer 19 of a damping material, and, on top of this layer 19, a thin piezo-ceramic disc 20, having a diameter of, in this case, 10 mm, and a layer 21 of an ultrasonically matching material. A resin ring 22 is positioned on top of the matching layer 21 and urged towards this layer 21 by means of an externally threaded collet 23. A (single) signal wire 24, for transducer excitation, is connected to one side of the piezo-ceramic disc 20. The other side of the piezo-ceramic disc 20 is electrically connected to the second part 10B. In assembled condition, the transducers 5, 6, are oriented such that ultrasound waves transmitted by one of these transducers 5, 6 will propagate to the other transducer along a spiral path, reflecting once on each of the remaining (side)walls.

The above-described embodiment (Figures 4A to 5B), suitable for use in DN25- and DN32-pipes, was tested by establishing the accuracy of flow volume measurements within a range of from 0.035 to 6 m3/h and by comparing the measurement results with a reference electromagnetic flowmeter having an error $\pm0.25\%$ within a flow rate range of from 0.25 to 6 m3/h and a maximum error of $\pm1.5\%$ at 0.035 m3/h. The flow volume errors were established using water, at four different temperatures, 20 $\pm5°$C, 50 $\pm5°$C, 90 $\pm5°$C and 120 $\pm5°$C, as a test medium, see Figure 7. The results show an excellent performance of the ultrasonic flowmeter in hand and meet the requirements of European Norm EN1434 with maximum permissible errors (Class 2) of complete heat meters. The solid curves in Figures 7 and 8 represent the admissible error limits at a permanent flow rate of 6 m$^3$/h). The measured pressure loss at this flow rate did not exceed 190 mbar, i.e. met the maximum admissible pressure loss at a permanent flow rate of 250 mbar, in accordance with EN1434.

In a second test, a Π-shaped flow profile disturber, consisting of four pipe elbows, was installed close to the ultrasonic flowmeter in the upstream direction and the flow volume errors were measured at a water temperature of 20 ±5°C. The results of this test, shown in Figure 8, illustrate the reduced sensitivity of the present flowmeter to an asymmetric flow profile, which, in practice, means that installation of the tube of the flowmeter in a pipe-line is less critical.

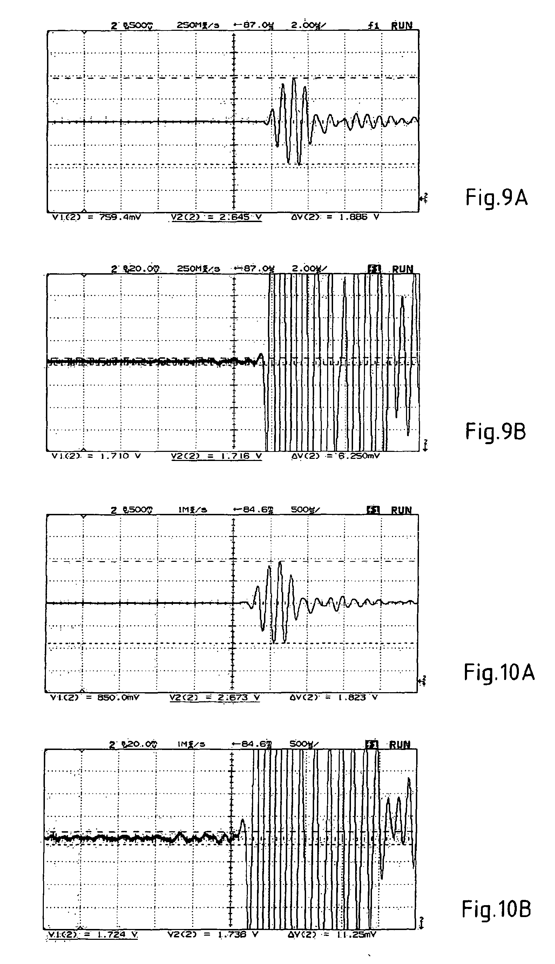

In a third test, the flowmeter according to the present invention, with L=100 mm and B=30 mm, was compared to a flowmeter comprising a measuring tube having a square cross-section, with L=100 mm and A=18 mm (where A is the length of the sides of the square cross-section) and equipped with the same ultrasonic transducers. The ultrasonic transducers were positioned to cause the acoustic waves to propagate along a spiral path via respectively two reflections (Δ) and three reflections (□). The purpose of this third test was to establish the ratio of the amplitudes of ultrasonic waves propagating along the spiral path (information) and waves that propagate along a more direct path, typically involving only one reflection (disturbance). Figure 9A (Δ) and Figure 10A (□) show the ultrasonic waveforms at the receiver of the respective flowmeters, Figure 9B and Figure 10B show the same signals at a different scale of the Y-axis. The disturbance is readily apparent from (the left-hand side of) Figures 9B and 10B and appears earlier than the ultrasonic waves propagating along a spiral path.

The ratios of the peak-to-peak amplitudes of waves propagating along the spiral path (information) and waves propagating along a more direct path are 1.823 V / 6.25 mV ≈ 291 for a measuring tube having a triangular cross-section and 1.886 V / 11.25 mV ≈ 167 for a measuring tube having a square cross-section. This improvement (more than 70%) results from enhanced absorption and deflection, at the V-shaped bottom of the triangular tube, of parasitic wave energy, and from a reduction of the number of reflections, i.e. energy losses at the reflecting surfaces are reduced and a stronger ultrasonic signal reaches the receivers. In the present example, the resistance of the flowmeter to contamination of reflecting surfaces was increased by more than 30%, when compared to the flowmeter having a measuring tube with a square cross-section and a spiral acoustic path formation.

The invention is not restricted to the above-described embodiments which can be varied in a number of ways within the scope of the claims. For instance, in battery powered low flow ultrasonic flowmeters, the invention will extend battery life, because of the reduced number of reflections (preferably only two reflections) of the ultrasonic signal inside the triangular measuring tube.

**Claims**

1.    Ultrasonic flowmeter (1) comprising a measuring tube (3), at least two ultrasound transmitting and/or receiving transducers (5, 6) located inside the tube (3), **characterized in that** at least the section of the tube (3) that extends between the transducers (5, 6) has a triangular cross-section.

2.    Ultrasonic flowmeter (1) according to claim 1, wherein at least one of the transducers (5, 6) is oriented such that ultrasound waves transmitted by this transducer (5, 6) will propagate at an angle inclined with respect to the central axis of the tube (3).

3.    Ultrasonic flowmeter (1) according to any one of the preceding claims, wherein at least one of the transducers (5, 6) is oriented such that ultrasound waves transmitted by this transducer (5, 6) will propagate to the other transducer (5, 6) along a spiral path.

4.    Ultrasonic flowmeter (1) according to claim 3, wherein the transducers (5, 6) are each directed to a different inner wall (4) of the tube (3), such that an acoustic signal transmitted from one of the transducers (5, 6) will be reflected to the other transducer via two walls (4B, 4C).

5.    Ultrasonic flowmeter (1) according to any of the preceding claims, wherein the tube (3) comprises a housing (10) having two main parts, a first part (10A) provided with a V-shaped channel section (11) and a second part (10B) having a flat surface (4A), which, together with the V-shaped channel (11), forms a triangular duct (3).

6.    Ultrasonic flowmeter (1) according to claim 5, wherein the transducers (5, 6) are mounted in the said flat surface (4A) of the second part (10B).

7.    Ultrasonic flowmeter (1) according to any of the preceding claims wherein the transducers (5, 6) have a diameter in a range from 5 mm to 16 mm.

8. Ultrasonic flowmeter (1) according to any of the preceding claims, wherein the measuring tube (3) has an internal width (B) in a range from 4 mm to 8 mm.

**Patentansprüche**

1. Ultraschalldurchflussmesser (1), umfassend eine Messröhre (3), wenigstens zwei Ultraschallübertragungs- und/ oder Empfangswandler (5, 6), die innerhalb der Röhre (3) angeordnet sind, **dadurch gekennzeichnet, dass** wenigstens der Abschnitt der Röhre (3), der sich zwischen den Wandlern (5, 6) erstreckt, einen dreieckigen Querschnitt aufweist.

2. Ultraschalldurchflussmesser (1) nach Anspruch 1, bei dem wenigstens einer der Wandler (5, 6) so orientiert ist, dass sich Ultraschallwellen, die von diesem Wandler (5, 6) ausgesendet werden, in einem Winkel, der bezüglich der zentralen Achse der Röhre (3) geneigt ist, fortpflanzen werden.

3. Ultraschalldurchflussmesser (1) nach einem der vorhergehenden Ansprüche, bei dem wenigstens einer der Wandler (5, 6) so orientiert ist, dass sich Ultraschallwellen, die von diesem Wandler (5, 6) ausgesendet werden, zu dem anderen Wandler (5, 6) entlang eines spiralförmigen Wegs fortpflanzen werden.

4. Ultraschalldurchflussmesser (1) nach Anspruch 3, bei dem jeder Wandler (5, 6) zu einer anderen inneren Wand (4) der Röhre (3) gerichtet ist, so dass ein akustisches Signal, das von einem der Wandler (5, 6) ausgesendet wird, zu dem anderen Wandler über zwei Wände (4B, 4C) reflektiert wird.

5. Ultraschalldurchflussmesser (1) nach einem der vorhergehenden Ansprüche, bei dem die Röhre (3) ein Gehäuse (10) umfasst, das zwei Hauptteile aufweist, einen ersten Teil (10A), der mit einem V-förmigen Kanalabschnitt (11) vorgesehen ist, und einen zweiten Teil (10B), der eine flache Oberfläche (4A) aufweist, die, zusammen mit dem V-förmigen Kanal (11), einen dreieckigen Durchgang (3) ausbildet.

6. Ultraschalldurchflussmesser (1) nach Anspruch 5, bei dem die Wandler (5, 6) in der flachen Oberfläche (4A) des zweiten Teils (10B) angebracht sind.

7. Ultraschalldurchflussmesser (1) nach einem der vorhergehenden Ansprüche, bei dem die Wandler (5, 6) einen Durchmesser in einem Bereich von 5 mm bis 16 mm aufweisen.

8. Ultraschalldurchflussmesser (1) nach einem der vorhergehenden Ansprüche, bei dem die Messröhre (3) eine Innenbreite (B) in einem Bereich von 4 mm bis 8 mm aufweist.

**Revendications**

1. Débitmètre à ultrasons (1) comprenant un tube de mesure (3), au moins deux transducteurs de transmission et/ou de réception d'ultrasons (5, 6) situés à l'intérieur du tube (3), **caractérisé en ce qu'**au moins la section du tube (3) qui s'étend entre les transducteurs (5, 6) possède une section transversale triangulaire.

2. Débitmètre à ultrasons (1) selon la revendication 1, dans lequel au moins l'un des transducteurs (5, 6) est orienté afin que les ondes ultrasonores transmises par ce transducteur (5, 6) se propagent à un angle incliné par rapport à l'axe central du tube (3).

3. Débitmètre à ultrasons (1) selon l'une quelconque des revendications précédentes, dans lequel au moins l'un des transducteurs (5, 6) est orienté afin que les ondes ultrasonores transmises par ce transducteur (5, 6) se propagent vers l'autre transducteur (5, 6) le long d'un trajet en spirale.

4. Débitmètre à ultrasons (1) selon la revendication 3, dans lequel les transducteurs (5, 6) sont chacun orientés vers une paroi intérieure différente (4) du tube (3), afin qu'un signal acoustique transmis par l'un des transducteurs (5, 6) soit réfléchi vers l'autre transducteur via deux parois (4B, 4C).

5. Débitmètre à ultrasons (1) selon l'une quelconque des revendications précédentes, dans lequel le tube (3) comprend un logement (10) ayant deux parties principales, une première partie (10A) munie d'une section de canal en forme de V (11) et une seconde partie (10B) ayant une surface plate (4A), qui, avec le canal en forme de V (11), forme un conduit triangulaire (3).

6. Débitmètre à ultrasons (1) selon la revendication 5, dans lequel les transducteurs (5, 6) sont montés dans ladite surface plate (4A) de la seconde partie (10B).

7. Débitmètre à ultrasons (1) selon l'une quelconque des revendications précédentes, dans lequel les transducteurs (5, 6) possèdent un diamètre de l'ordre de 5 mm à 16 mm.

8. Débitmètre à ultrasons (1) selon l'une quelconque des revendications précédentes, dans lequel le tube de mesure (3) possède une largeur interne (B) de l'ordre de 4 mm à 8 mm.

Fig.1

Fig.2A

Fig.2B

FIG.2D

Fig.2C

Fig.3

Fig.4A

Fig.4B

Fig.4C

Fig.5A

Fig.5B

Fig.6

Fig.7

Fig.8

Fig.9A

Fig.9B

Fig.10A

Fig.10B

**EP 1 742 024 B1**

**REFERENCES CITED IN THE DESCRIPTION**

**Patent documents cited in the description**

- US 5650572 A
- EP 890826 A
- JP 11237263 B